# EUROPEAN PATENT SPECIFICATION

(11) **EP 2 963 503 B1**
(45) Date of publication and mention of the grant of the patent: **20.05.2020**
(21) Application number: 14757203.6
(22) Date of filing: 07.02.2014
(51) Int. Cl.: G03H 1/04, G02B 5/30, G02F 1/13

(54) **LUMINOUS FLUX SPLITTING ELEMENT**
LICHTSTROMTEILUNGSELEMENT
ÉLÉMENT DE DIVISION DE FLUX LUMINEUX

(30) Priority: 01.03.2013 JP 2013041000
(43) Date of publication of application: 06.01.2016
(73) Proprietor: Citizen Watch Co., Ltd., Tokyo 188-8511 (JP)
(72) Inventor: TANABE, Ayano, Nishitokyo-shi Tokyo 188-8511 (JP); HASHIMOTO, Nobuyuki, Nishitokyo-shi Tokyo 188-8511 (JP)
(74) Representative: Patentanwälte Ruff, Wilhelm, Beier, Dauster & Partner mbB
(86) International application number: PCT/JP2014/052946
(87) International publication number: WO 2014/132781

(56) References cited:
- WO-A1-2006/115147
- WO-A1-2012/096032
- JP-A- H11 133 842
- JP-A- 2007 219 526
- US-A- 5 917 798
- US-A1- 2007 182 915
- US-A1- 2007 195 409
- US-A1- 2008 055 536
- GARY BROOKER ET AL: "In-line FINCH super resolution digital holographic fluorescence microscopy using a high efficiency transmission liquid crystal GRIN lens", OPTICS LETTERS, OPTICAL SOCIETY OF AMERICA, US, vol. 38, no. 24, 15 December 2013 (2013-12-15), pages 5264-5267, XP001587412, ISSN: 0146-9592, DOI: 10.1364/OL.38.005264 [retrieved on 2013-12-04]
- A. W. Lohmann: "Wavefront Reconstruction for Incoherent Objects", JOURNAL OF THE OPTICAL SOCIETY OF AMERICA, vol. 55, no. 11, 1 November 1965 (1965-11-01), page 1555_1, XP055443774, US ISSN: 0030-3941, DOI: 10.1364/JOSA.55.1555_1

## Description

The present invention relates to a beam splitting device for splitting a beam.

In recent years, an in-line hologram generating method has been proposed which generates an in-line hologram by illuminating a sample with incoherent light, by splitting the light reflected or scattered by the sample into a parallel beam and a convergent beam having a common optical axis by using a spatial light modulator, and by detecting interference fringes formed by the two beams on a detector, refer, for example, to laid-open publication U.S. 2008/0204833 A1 (patent document 1) and Rosen and Brooker, "Fresnel incoherent correlation holography (FINCH): a review of research", Adv. Opt. Techn., 2012, Vol. 1, pp. 151-169 (non-patent document 1) .

In the above method, a plurality of transparent electrodes arranged in a matrix pattern, for example, are provided within the spatial light modulator in order to make the spatial light modulator function as a Fresnel zone plate. Since a nonuniform structure is formed within the spatial light modulator due to the presence of the transparent electrodes, diffraction other than the diffraction of the convergent beam used for the formation of interference fringes occurs, as a result of which the efficiency of light utilization drops. Further, when the spatial light modulator is a liquid crystal device having a liquid crystal layer in which homogeneously aligned liquid crystal molecules are contained, the spatial light modulator can modulate the phase of light whose plane of polarization is parallel to the alignment direction of the liquid crystal molecules, but is not capable of modulating the phase of light whose plane of polarization is perpendicular to the alignment direction of the liquid crystal molecules; as a result, the convergent beam contains only light polarized in one particular plane. This results in the problem that the length of the optical system increases, though good contrast can be achieved at the position where the spot size of the convergent beam coincides with the spot size of the parallel beam. Furthermore, the spatial light modulator has to fulfill the function of a diffractive lens as well as the function of providing a prescribed amount of phase modulation to the beam, and it is therefore not possible to increase the power of the diffractive lens; as a result, the overall length of the optical system increases.

Patent publication US 5,917,798 discloses an optical information recording/playback apparatus having a pickup device which comprises an objective lens opposing a transparent substrate of an optical information recording medium, a split optical rotation plate, an S-polarized light hologram, a spatial optical modulator, a P-polarized light hologram, a polarizing beam splitter, and a CCD array which are arranged in the mentioned order. The spatial optical modulator has a multiplicity of pixels arranged in the form of a matrix or grating where the polarizing direction of the light emitted from each pixel is selectable so that the light is spatially modulated by the difference in the polarization direction. To this end the spatial optical modulator may be constructed such that each pixel causes a +90° rotation of the polarizing direction when it is off, but causes no rotation when it is on. In recording operation the
spatial optical modulator selects one of two stages, i.e. on and off, for each of the pixels in accordance with the information to be recorded. In playback operation, all pixels of the spatial optical modulator are turned on, so no rotation of the polarizing direction is effected and S-polarized light passes through the spatial optical modulator. The split optical rotation plate has two optical rotation plates disposed, respectively, on the left and right sides of an optical axis. One of these plates effects a +45° rotation of the polarizing direction, while the other plate causes a -45° rotation
of the polarizing direction, if correspondingly activated.

Laid-open publication US 2008/0055536 A1 discloses an imaging lens comprising a liquid crystal lens and a refractive lens laminated together, where the liquid crystal lens comprises a Fresnel diffraction lens surface.

Similarly, laid-open publication US 2007/0195409 A1 discloses a stereoscopic image conversion panel comprising a lens liquid crystal layer including liquid crystal molecules having an anisotropic refractive index to refract light having a first polarization state so as to generate a stereoscopic image based on a received flat image.

In addition, laid-open publication US 2007/0182915 A1 discloses a liquid crystal diffraction lens element comprising a pair of transparent substrates, a liquid crystal sandwiched between them, transparent electrodes, a first and a second birefringent Fresnel lens member formed between the liquid crystal and a respective one of the transparent substrates and having a Fresnel lens shape being made of birefringent material, where an extraordinary refractive index direction of the two Fresnel lens members are perpendicular to each other.

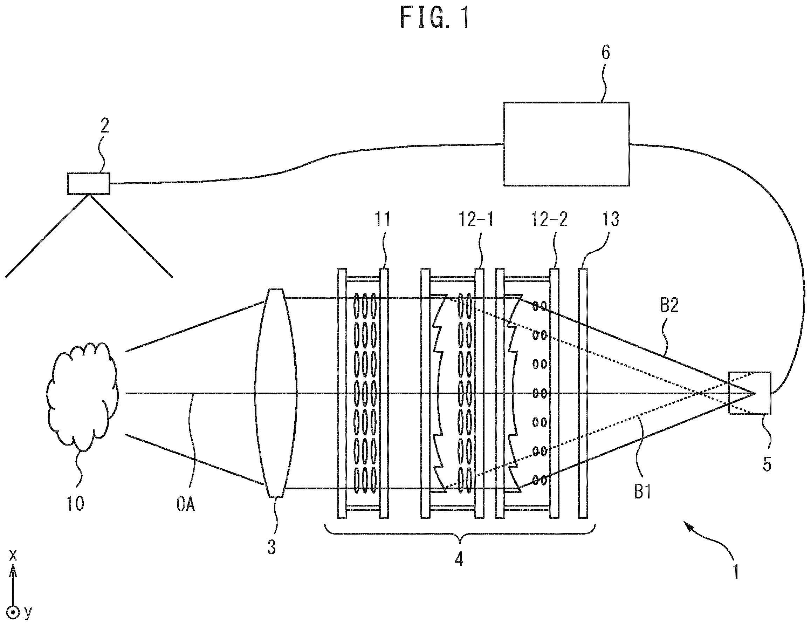

The publication : "Wavefront Reconstruction for Incoherent Objects" by A. W. Lohmann, in the Journal of the Optical Society of America, vol. 55, no. 11, 1 November 1965, page 1555, discloses in Fig. 1a, a beam splitting device for recording in-line holograms using incoherent light and comprising a birefringent lens located between two polarisers oriented such as to bisect the crystal axes.

Accordingly, it is the technical problem underlying the invention to provide a beam splitting device that can reduce the overall length of the optical system while improving the contrast of interference fringes.

The invention solves this problem by providing a beam splitting device having the features of claim 1. Advantageous embodiments of the invention are mentioned in the dependent claims, the wording of which is herewith incorporated into the description by reference.

Preferably, in the beam splitting device, the at least one birefringent lens includes a first birefringent lens and a second birefringent lens arranged along the optical axis. The first birefringent lens includes a birefringent layer which has a first refractive index for the first polarization component and a second refractive index for the second polarization component, and a transparent material layer which has the second refractive index, wherein the birefringent layer and the transparent material layer are arranged along the optical axis so as to form therebetween a lens surface that has power for the first polarization component. On the other hand, the second birefringent lens includes a birefringent layer which has a third refractive index for the first polarization component and a fourth refractive index for the second polarization component, and a transparent material layer which has the third refractive index, wherein the birefringent layer and the transparent material layer are arranged along the optical axis so as to form therebetween a lens surface that has power for the second polarization component.

Preferably, in the beam splitting device, the first birefringent lens further includes two transparent electrodes disposed opposite each other by sandwiching the birefringent layer therebetween, wherein the birefringent layer is a liquid crystal layer which contains liquid crystal molecules and which is aligned so that long axes of the liquid crystal molecules are oriented in a direction parallel to the first polarization component, and the first birefringent lens varies the power for the first polarization component by varying the first refractive index according to a voltage applied between the two transparent electrodes.

Preferably, in the beam splitting device, the at least one birefringent lens consists in a single birefringent lens and includes a birefringent layer which has a first refractive index for the first polarization component and a second refractive index for the second polarization component, and a transparent material layer which has a third refractive index, wherein the birefringent layer and the transparent material layer are arranged along the optical axis so as to form therebetween a lens surface that has first power for the first polarization component and second power for the second polarization component.

The beam splitting device according to the present invention offers the effect of being able to reduce the overall length of the optical system while improving the contrast of interference fringes.

Advantageous embodiments of the invention are described in the following and illustrated in the accompanying drawings, in which:
Figure 1 is a diagram schematically illustrating the construction of a hologram generating apparatus incorporating a beam splitting device according to a first embodiment of the present invention.
Figure 2A is a schematic front view of a phase modulating device as viewed from a sample.
Figure 2B is a schematic cross-sectional side view of the phase modulating device, taken along line AA' in Figure 2A.
Figure 3 is a schematic cross-sectional side view of a birefringent lens.
Figure 4A is a schematic front view of a liquid crystal birefringent lens according to a modified example.
Figure 4B is a schematic side view of the liquid crystal birefringent lens according to the modified example.
Figure 5 is a schematic cross-sectional side view of the liquid crystal birefringent lens, taken along line BB' in Figure 4A.
Figure 6 is a diagram schematically illustrating the construction of a hologram generating apparatus incorporating a beam splitting device according to a second embodiment of the present invention.
Figure 7A is a diagram illustrating the case in which the hologram generating apparatus incorporating the beam splitting device according to any one of the embodiments of the present invention or their modified examples is used in a hologram mode.
Figure 7B is a diagram illustrating the case in which the hologram generating apparatus incorporating the beam splitting device according to any one of the embodiments of the present invention or their modified examples is used in a focus mode.
Figure 8A is a diagram illustrating the case in which the hologram generating apparatus incorporating a beam splitting device having a bulk lens is used in the hologram mode.
Figure 8B is a diagram illustrating the case in which the hologram generating apparatus incorporating a beam splitting device having a bulk lens is used in the focus mode.
Figure 9 is a diagram illustrating how beams vary with the wavelength of incident light in the hologram generating apparatus incorporating the beam splitting device having a bulk lens.

One embodiment of a beam splitting device will be described below with reference to drawings. The beam splitting device provides a desired phase difference between two mutually perpendicular polarization components of reflected light, scattered light, or fluorescent light from an illuminated sample by using a phase modulating device. Further, the beam splitting device splits the light passed through the phase modulating device into two convergent beams with different polarization components on the same optical axis by using two birefringent lenses disposed behind the phase modulating device. Then, the beam splitting device forms interference fringes on a detector by making the two convergent beams converge onto the detector.

Figure 1 is a diagram schematically illustrating the construction of a hologram generating apparatus incorporating a beam splitting device according to a first embodiment of the present invention. As illustrated in Figure 1, the hologram generating apparatus 1 includes a light source 2, a collimator 3, the beam splitting device 4, a detector 5, and a controller 6.

The light source 2 includes a light-emitting device which emits incoherent light or coherent light as illuminating light. For this purpose, the light source 2 includes, for example, a mercury lamp as a light-emitting device for emitting incoherent light. Alternatively, the light source 2 may include a xenon arc lamp or an incandescent lamp as a light-emitting device for emitting incoherent light. The light source 2 may further include a color filter that only transmits light of a specific color in the incoherent light emitted from the light-emitting device. Alternatively, the light source 2 may further include a plurality of color filters for transmitting light of different colors and a color filter holding unit for placing a selected one of the color filters into the light path of the incoherent light emitted from the light-emitting device.

Further alternatively, the light source 2 may include any one of various kinds of laser light sources such as a semiconductor laser, a gas laser, or a solid laser as a light source for emitting coherent light.

Alternatively, the light source 2 may include a plurality of light-emitting devices that emit light of different wavelengths. In this case, the light source 2 causes one of the light-emitting devices to emit illuminating light in accordance with a control signal from the controller 6.

The light emitted from the light source 2 is reflected or scattered by a sample 10 or excites phosphors on the sample 10 dyed with fluorescence, and the reflected light, scattered light, or fluorescent light is converted into parallel light by the collimator 3 and then passed through the beam splitting device 4 which splits the light into two convergent beams propagating along the optical axis OA. The two convergent beams are made to converge onto the optical axis OA near the detection surface of the detector 5, thus forming interference fringes on the detection surface.

The detector 5 includes a plurality of CCDs or CMOS devices or other solid-state imaging devices arranged in an array, and generates for each imaging operation an image of the interference fringes formed on the detection surface by outputting an electrical signal proportional to the intensity of light received by each solid-state imaging device. The detector 5 supplies the image of the interference fringes to the controller 6.

The controller 6 includes, for example, a processor, a memory, and an interface circuit for connecting the controller 6 to the various parts constituting the hologram generating apparatus 1. The controller 6 supplies prescribed power to the light source 2, causing the light source 2 to emit illuminating light. When the light source 2 includes a plurality of light-emitting devices, the controller 6 transmits a control signal to the light source 2 to cause one of the light-emitting devices to emit illuminating light, for example, in response to a user operation entered via a user interface not depicted.

The controller 6 further includes a driving circuit not depicted, and controls the phase difference to be provided between the two beams output from the beam splitting device 4, by controlling the voltage to be applied to the phase modulating device in the beam splitting device 4 via the driving circuit. The phase difference control will be described later.

The drive voltage applied from the driving circuit to the phase modulating device may be, for example, a pulse-height modulated (PHM) or pulse-width modulated (PWM) AC voltage.

Further, the controller 6 generates an in-line hologram of the sample 10 from a plurality of interference fringe images generated by varying the phase difference between the convergent beams and received from the detector 5. For example, by controlling the phase difference to be introduced by the phase modulating device, the controller 6 acquires an interference fringe image when the phase difference is 0°, an interference fringe image when the phase difference is 120°, and an interference fringe image when the phase difference is 240°, respectively, and creates an in-line hologram from these three images. The details of image computation for generating an in-line hologram from a plurality of interference fringe images are disclosed, for example, in the earlier cited non-patent document 1.

The beam splitting device 4 according to the first embodiment of the present invention will be described below.

The beam splitting device 4 includes a phase modulating device 11, birefringent lenses 12-1 and 12-2, and a polarizing plate 13.

As the light enters the phase modulating device 11, the phase of a polarization component parallel to a designated direction is shifted relative to the phase of a polarization component perpendicular to the designated direction by an amount equal to the amount of phase modulation proportional to the voltage applied from the controller 6. In the present embodiment, the phase modulating device 11 is a liquid crystal device having a liquid crystal layer in which homogeneously aligned liquid crystal molecules are contained.

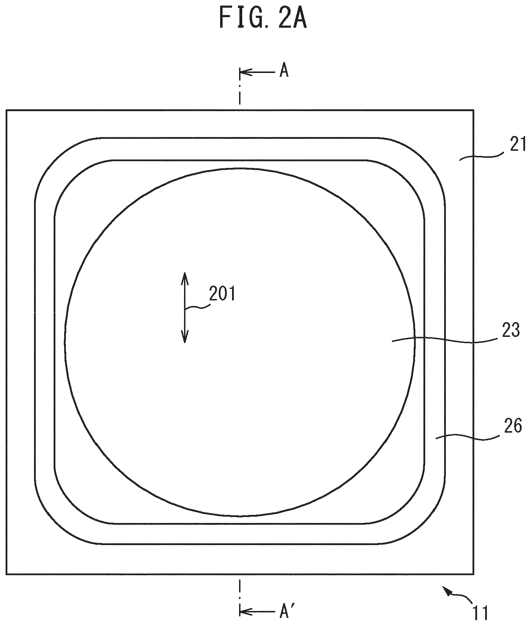

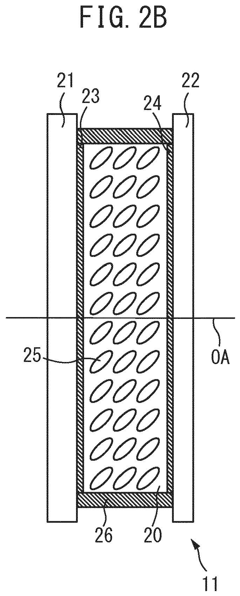

Figure 2A is a schematic front view of the phase modulating device 11 as viewed from the sample 10, and Figure 2B is a schematic cross-sectional side view of the phase modulating device 11, taken along line AA' in Figure 2A.

The phase modulating device 11 includes a liquid crystal layer 20 and transparent substrates 21 and 22 disposed along the optical axis OA and substantially parallel to each other on both sides of the liquid crystal layer 20. The phase modulating device 11 further includes a transparent electrode 23 disposed between the transparent substrate 21 and the liquid crystal layer 20 and a transparent electrode 24 disposed between the liquid crystal layer 20 and the transparent substrate 22. Liquid crystal molecules 25 contained in the liquid crystal layer 20 are sealed between the transparent substrates 21 and 22 by a sealing member 26. The liquid crystal layer 20 is chosen to have a thickness, for example, a 10-µm thickness, that is sufficient to provide a desired phase difference of 0° to 360° between two mutually perpendicular polarization components.

The transparent substrates 21 and 22 are formed from a material such as glass or resin that is transparent to the illuminating light that the light source 2 emits. On the other hand, the transparent electrodes 23 and 24 are formed from a material such as indium tin oxide called ITO. The transparent electrodes 23 and 24 are each formed so as to cover the entire active region that drives the liquid crystal molecules 25. Further, an alignment film (not depicted) is interposed between the transparent electrode 23 and the liquid crystal layer 20. Likewise, an alignment film (not depicted) is interposed between the transparent electrode 24 and the liquid crystal layer 20. These alignment films each cause the liquid crystal molecules 25 to align in a specific direction.

Further, a frame (not depicted) for holding the substrates may be placed around the outer peripheries of the substrates, transparent electrodes, and alignment films.

The liquid crystal molecules 25 contained in the liquid crystal layer 20 are, for example, homogeneously aligned. Then, the liquid crystal molecules 25 are aligned so that their long axes are oriented in a specific direction, for example, the direction indicated by arrow 201, within a plane perpendicular to the optical axis OA.

When a voltage is applied between the transparent electrodes 23 and 24, the liquid crystal molecules 25 tilt in a direction parallel to the direction of the voltage application in response to the applied voltage. The light passing through the liquid crystal layer 20 makes an angle φ with respect to the direction of the long axes of the liquid crystal molecules 25, where φ is the angle that the direction of the long axes make with the direction of the voltage application. In this case, the refractive index n_{φ} of the liquid crystal molecules for the polarization component parallel to the alignment direction of the liquid crystal molecules 25 is defined by the relation nₒ ≤ n_{φ} ≤ nₑ, where nₒ is the refractive index for the polarization component perpendicular to the direction of the long axes of the liquid crystal molecules, and nₑ is the refractive index for the polarization component parallel to the direction of the long axes of the liquid crystal molecules.

As a result, when the liquid crystal molecules 25 contained in the liquid crystal layer 20 are homogeneously aligned, and the thickness of the liquid crystal layer 20 is d, an optical path length difference Δnd (= n_{φ}d - nₒd) occurs between the polarization component parallel to the alignment direction of the liquid crystal molecules 25 and the polarization component perpendicular to the alignment direction of the liquid crystal molecules 25. Accordingly, by adjusting the voltage applied across the liquid crystal layer 20 between the transparent electrodes 23 and 24, the beam splitting device 4 can provide a phase difference of 2πΔnd/λ between the polarization component parallel to the alignment direction of the liquid crystal molecules 25 and the polarization component perpendicular to the alignment direction of the liquid crystal molecules 25. Here, λ represents the wavelength of the light passing through the liquid crystal layer 20.

For convenience of explanation, the alignment direction of the liquid crystal molecules 25 will hereinafter be referred to as the x direction and the direction perpendicular to the alignment direction of the liquid crystal molecules 25 as the y direction.

For example, the controller 6 stores a mapping table that provides a mapping between the applied voltage and the phase difference resulting between the polarization component in the x direction and the polarization component in the y direction and, by referring to the mapping table, may determine the voltage to be applied to the liquid crystal layer 20 for the desired phase difference.

If the light source 2 includes a plurality of light-emitting devices for emitting light of different wavelengths or a plurality of color filters for transmitting different wavelengths, the controller 6 can perform control to provide a desired phase difference between the polarization component in the x direction and the polarization component in the y direction by adjusting the voltage to be applied across the liquid crystal layer 20 between the transparent electrodes 23 and 24 according to the wavelength of the light that the light source 2 emits to illuminate the sample 10.

In this case, the controller may store, for each wavelength, a mapping table that provides a mapping between the applied voltage and the phase difference resulting between the polarization component in the x direction and the polarization component in the y direction. Then, by referring to the mapping table for the wavelength used, the controller 6 can appropriately determine the voltage to be applied to the liquid crystal layer 20 for the desired phase difference.

Similarly, for each of a plurality of temperatures of the phase modulating device 11, the controller may store a mapping table that provides a mapping between the applied voltage and the phase difference resulting between the polarization component in the x direction and the polarization component in the y direction. Then, by referring to the mapping table corresponding to the temperature closest to the temperature measured, for example, by a thermometer (not depicted) placed near the phase modulating device 11, the controller 6 can appropriately determine the voltage to be applied to the liquid crystal layer 20 for the desired phase difference.

The light passed through the phase modulating device 11 enters the birefringent lenses 12-1 and 12-2.

The birefringent lens 12-1 is a lens that has positive power for the polarization component whose plane of polarization is parallel to the x direction, i.e., the polarization component whose phase is modulated by the phase modulating device 11, but has no power for the polarization component whose plane of polarization is parallel to the y direction. Conversely, the birefringent lens 12-2 is a lens that has no power for the polarization component whose plane of polarization is parallel to the x direction, but has positive power for the polarization component whose plane of polarization is parallel to the y direction. As a result, when the light is passed through the phase modulating device 11, the polarization component whose plane of polarization is parallel to the x direction is converted into a convergent beam by the birefringent lens 12-1, on the other hand, the polarization component whose plane of polarization is parallel to the y direction is converted into a convergent beam by the birefringent lens 12-2. In this way, the light passed through the phase modulating device 11 is split into two convergent beams by the birefringent lenses 12-1 and 12-2.

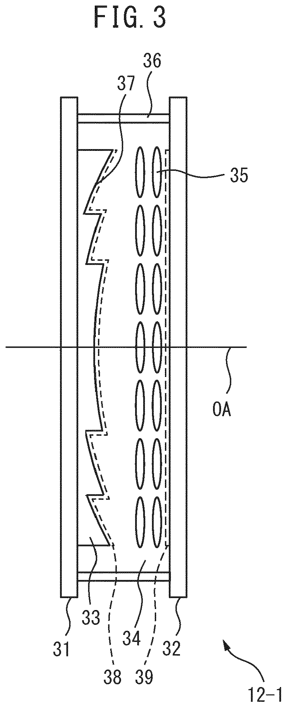

Figure 3 is a schematic cross-sectional side view of the birefringent lens 12-1, taken in a plane passing through the optical axis OA and parallel to the x direction.

The birefringent lens 12-1 includes two transparent substrates 31 and 32 arranged substantially parallel to each other, a transparent material layer 33 sandwiched between the transparent substrates 31 and 32 and formed on the surface of the transparent substrate 31 that opposes the transparent substrate 32, and a liquid crystal layer 34 formed between the transparent material layer 33 and the transparent substrate 32.

The transparent material layer 33 is formed, for example, from a UV curable transparent resin so that a lens surface can be formed along a boundary between it and the liquid crystal layer 34, as will be described later.

On the other hand, the liquid crystal layer 34 is one example of a birefringent layer whose refractive index differs depending on the plane of polarization of the light passing through the liquid crystal layer 34. Liquid crystal molecules 35 are sealed in the liquid crystal layer 34 by a sealing member 36 provided around the liquid crystal layer 34, and are prevented from leaking outside the liquid crystal layer 34. The transparent material layer may be provided on the transparent substrate 32 side, and the liquid crystal layer may be provided on the transparent substrate 31 side.

A Fresnel lens surface 37 with its center on the optical axis OA is formed along the boundary between the transparent material layer 33 and the liquid crystal layer 34 so as to be convex toward the transparent material layer 33. The continuous surface between each step on the Fresnel lens surface 37 is formed, for example, as a spherical surface.

An alignment film for aligning the liquid crystal molecules 35 in a specific direction is formed on both the Fresnel lens surface 37 of the transparent material layer 33 and the surface of the transparent substrate 32 that faces the liquid crystal layer 34.

In the present embodiment, the liquid crystal molecules 35 are homogeneously aligned with their long axes oriented parallel to the x direction. In other words, the alignment direction of the liquid crystal molecules 35 contained in the birefringent lens 12-1 coincides with the alignment direction of the liquid crystal molecules 25 contained in the phase modulating device 11. The material of the liquid crystal molecules 35 and the material of the transparent material layer 33 are chosen so that the refractive index for the polarization component in the direction (the y direction) perpendicular to the direction of the long axes of the liquid crystal molecules 35 becomes equal to the refractive index of the transparent material layer 33. With this arrangement, the Fresnel lens surface 37 has no power for the polarization component whose plane of polarization is parallel to the y direction. On the other hand, since the refractive index for the polarization component parallel to the direction of the long axes of the liquid crystal molecules 35 is higher than the refractive index for the polarization component perpendicular to the direction of the long axes, the Fresnel lens surface 37 has positive power for the polarization component whose plane of polarization is parallel to the x direction. Accordingly, the polarization component whose plane of polarization is parallel to the x direction is converted into a convergent beam by the Fresnel lens surface 37, on the other hand, the polarization component whose plane of polarization is parallel to the y direction is passed unchanged through the Fresnel lens surface 37 and emerges as a parallel beam.

The birefringent lens 12-2 is substantially identical in structure to the birefringent lens 12-1. However, in the birefringent lens 12-2, the liquid crystal molecules contained in the liquid crystal layer are homogeneously aligned with their long axes oriented parallel to the y direction. As a result, conversely to the case of the birefringent lens 12-1, the polarization component whose plane of polarization is parallel to the y direction is converted into a convergent beam by the Fresnel lens surface in the birefringent lens 12-2, but the birefringent lens 12-2 acts as a parallel plate for the polarization component whose plane of polarization is parallel to the x direction. In this way, the light passed through the phase modulating device 11 is split into two convergent beams, one being a beam B1 whose plane of polarization is parallel to the x direction and the other a beam B2 whose plane of polarization is parallel to the y direction, by passing through the birefringent lenses 12-1 and 12-2, respectively. Both the beams B1 and B2 propagate along the optical axis OA and are converged onto the optical axis OA near the detection surface of the detector 5.

The birefringent lens 12-1 and the birefringent lens 12-2 may be interchanged in position.

According to a modified example, in each birefringent lens, the material of the transparent material layer and the material of the liquid crystal molecules may be chosen so that the refractive index of the liquid crystal layer for the polarization component in the direction parallel to the direction of the long axes of the liquid crystal molecules becomes equal to the refractive index of the transparent material layer. In this case, since the refractive index of the transparent material layer becomes higher than the refractive index of the liquid crystal layer for the polarization component in the direction perpendicular to the direction of the long axes of the liquid crystal molecules, the birefringent lens has positive power, and therefore, the Fresnel lens surface is formed so as to be convex toward the liquid crystal layer.

According to another modified example, each birefringent lens may include, instead of the liquid crystal layer, a birefringent layer formed from a uniaxial birefringent crystal. In this case also, the birefringent crystal need be aligned so that the fast axis of the birefringent crystal is oriented in the x direction in the case of one birefringent lens and in the y direction in the case of the other birefringent lens. Further, in this modified example, the material of the birefringent crystal and the material of the transparent material layer are chosen so that the refractive index of the birefringent crystal for the ordinary ray becomes equal to the refractive index of the transparent material layer, and the Fresnel lens surface is formed so as to be convex toward the transparent material layer. Alternatively, the material of the birefringent crystal and the material of the transparent material layer may be chosen so that the refractive index of the birefringent crystal for the extraordinary ray becomes equal to the refractive index of the transparent material layer, and the Fresnel lens surface may be formed so as to be convex toward the birefringent layer.

The convergent beams B1 and B2 enter the polarizing plate 13.

The polarizing plate 13 allows only a polarization component whose plane of polarization is oriented in a direction that bisects the angle that the x direction makes with the y direction, i.e., whose plane of polarization is oriented 45° with respect to the x direction, to pass through. Accordingly, the convergent beams B1 and B2 passed through the polarizing plate 13 each have a plane of polarization oriented 45° with respect to the x direction, and they interfere with each other. Further, since the transmission axis of the polarizing plate 13 is oriented along the direction that bisects the angle that the x direction makes with the y direction, the convergent beams B1 and B2 passed through the polarizing plate 13 are substantially equal in intensity, provided that the light from the sample is substantially unpolarized. Since the convergent beams B1 and B2 falling on the detection surface of the detector 5 are substantially equal in intensity, interference fringes with good contrast can be obtained.

In order to minimize the difference in intensity between the convergent beams B1 and B2, it is preferable that the detector 5 is placed so that the spot size of the convergent beam B1 and the spot size of the convergent beam B2 become substantially equal to each other on the detection surface of the detector 5.

As has been described above, in the beam splitting device according to the first embodiment of the present invention, the overall length of the optical system from the sample to the detector can be reduced, because the two mutually perpendicular polarization components can each be converted into a convergent beam by using a Fresnel lens that can be made to have relatively high power. Further, since the phase modulating device used in the beam splitting device modulates the phase of the beam by using transparent electrodes uniformly formed across the entire region through which the beam passes, no diffraction occurs due to the transparent electrode structure. As a result, the beam splitting device can improve the efficiency of light utilization. Furthermore, since the two beams can be made substantially equal in intensity, the beam splitting device can improve the contrast of the interference fringes.

According to a modified example, each birefringent lens used in the above embodiment may be replaced by a liquid crystal birefringent lens having a plurality of ring-shaped transparent electrodes centered around the optical axis.

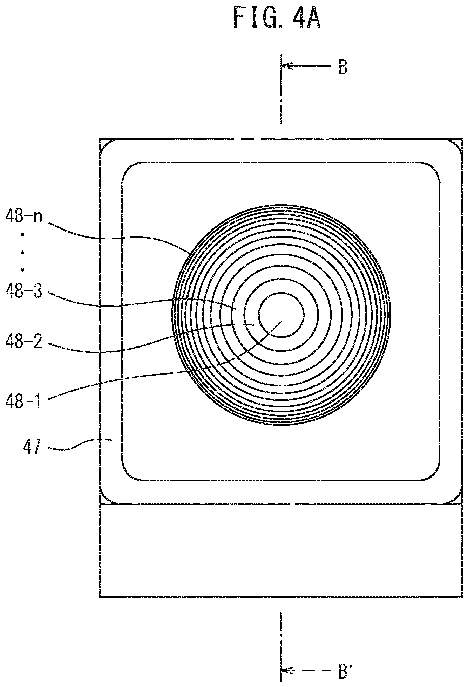

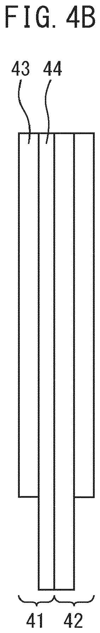

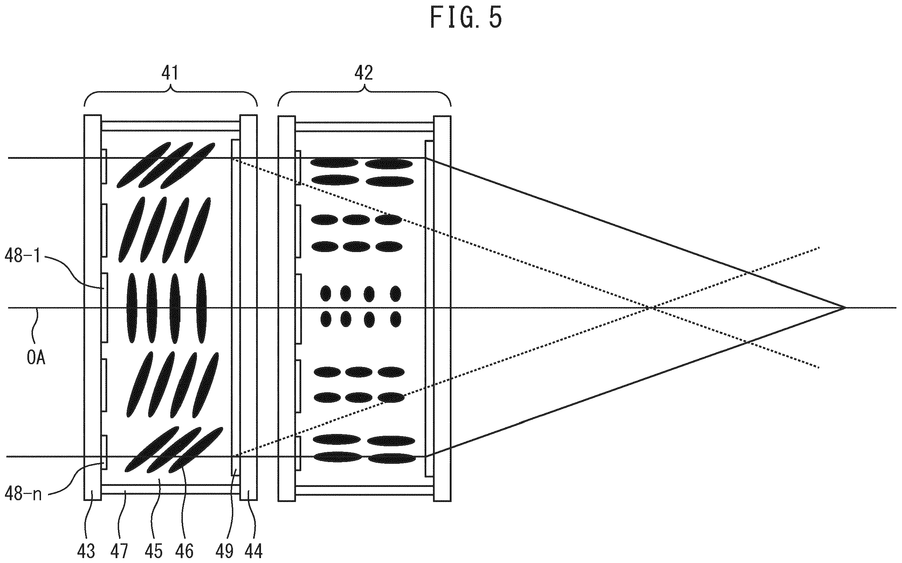

Figure 4A is a schematic front view of the liquid crystal birefringent lens according to this modified example, and Figure 4B is a schematic side view of the liquid crystal birefringent lens according to this modified example. Figure 5 is a schematic cross-sectional side view of the liquid crystal birefringent lens, taken along line BB' in Figure 4A.

This modified example includes two liquid crystal birefringent lenses 41 and 42. In the liquid crystal birefringent lens 41, the liquid crystal molecules contained in the liquid crystal layer are homogeneously aligned so that the long axes of the liquid crystal molecules are oriented parallel to the x direction, while in the liquid crystal birefringent lens 42, the liquid crystal molecules contained in the liquid crystal layer are homogeneously aligned so that the long axes of the liquid crystal molecules are oriented parallel to the y direction. Otherwise, the two liquid crystal birefringent lenses are identical in structure. Therefore, the following description deals only with the liquid crystal birefringent lens 41.

The liquid crystal birefringent lens 41 includes two transparent substrates 43 and 44 arranged substantially parallel to each other, and a liquid crystal layer 45 sandwiched between the transparent substrates 43 and 44. The liquid crystal molecules 46 contained in the liquid crystal layer 45 are prevented from leaking outside the liquid crystal layer 45 by a sealing member 47 provided around the liquid crystal layer 45.

Further, a plurality of ring-shaped transparent electrodes 48-1 to 48-n formed in concentric fashion with the optical axis OA as a common center are provided on the surface of the transparent substrate 43 that faces the liquid crystal layer 45. Any two adjacent ring-shaped transparent electrodes are spaced a prescribed distance apart and insulated from each other. In Figure 4A, the spacing between each ring-shaped transparent electrode is indicated by a single line for simplicity of illustration. In Figure 5, only three ring-shaped transparent electrodes are depicted for simplicity of illustration, but a larger number of ring-shaped transparent electrodes may be provided as illustrated in Figure 4A. On the other hand, a transparent electrode 49 is provided on the surface of the transparent substrate 44 that faces the liquid crystal layer 45. The ring-shaped transparent electrodes 48-1 to 48-n and the transparent electrode 49 are respectively formed so as to cover the entire active region that drives the liquid crystal molecules 46. The ring-shaped transparent electrodes 48-1 to 48-n and the transparent electrode 49 are each connected to the controller 6.

Further, an alignment film (not depicted) for causing the liquid crystal molecules 46 to align in a specific direction is provided so as to cover the surfaces of the ring-shaped transparent electrodes 48-1 to 48-n that face the liquid crystal layer 45, and a similar alignment film (not depicted) is also formed on the surface of the transparent electrode 49 that faces the liquid crystal layer 45.

In this modified example, by varying the voltage to be applied relative to the transparent electrode 49 for each of the ring-shaped transparent electrodes 48-1 to 48-n, the controller 9 can vary the angle that the liquid crystal molecules 46 sandwiched between any given ring-shaped transparent electrode and the transparent electrode 49 make with the optical axis OA for each of the ring-shaped transparent electrodes 48-1 to 48-n. As a result, the refractive index of the liquid crystal layer between any given ring-shaped transparent electrode and the transparent electrode 49 for the polarization component parallel to the x direction can be varied for each of the ring-shaped transparent electrodes 48-1 to 48-n. For example, the controller applies a voltage between each of the ring-shaped transparent electrodes 48-1 to 48-n and the transparent electrode 49 so that the refractive index of the liquid crystal layer 46 for the polarization component parallel to the x direction decreases with increasing distance from the optical axis OA. In this way, the liquid crystal birefringent lens 41 functions as a GRIN lens having positive power for the polarization component parallel to the x direction, and can convert the polarization component parallel to the x direction into a convergent beam.

Similarly, in the case of the liquid crystal birefringent lens 42, by applying a voltage between each ring-shaped transparent electrode and the transparent electrode so that the refractive index of the liquid crystal layer for the polarization component parallel to the y direction decreases with increasing distance from the optical axis OA, the controller 6 can make the liquid crystal birefringent lens 42 function as a GRIN lens having positive power for the polarization component parallel to the y direction.

Accordingly, in this modified example also, the incident beam can be split into two convergent beams one for each of the two polarization components by passing through the two liquid crystal birefringent lenses 41 and 42.

According to another modified example, the beam splitting device may include only one birefringent lens. In this case, the beam with one or the other of the polarization components is passed unchanged through the beam splitting device and emerges as a parallel beam. As a result, interference fringes similar to those generated by the device disclosed in non-patent document 1 are formed on the detection surface of the detector 5.

Next, a beam splitting device according to a second embodiment will be described. The beam splitting device according to the second embodiment differs from the beam splitting device according to the first embodiment in that only one birefringent lens is provided and in that the relationship between the refractive index of the transparent material layer of the birefringent lens and the refractive index of the liquid crystal layer is different. The following description will therefore be given by dealing with the birefringent lens.

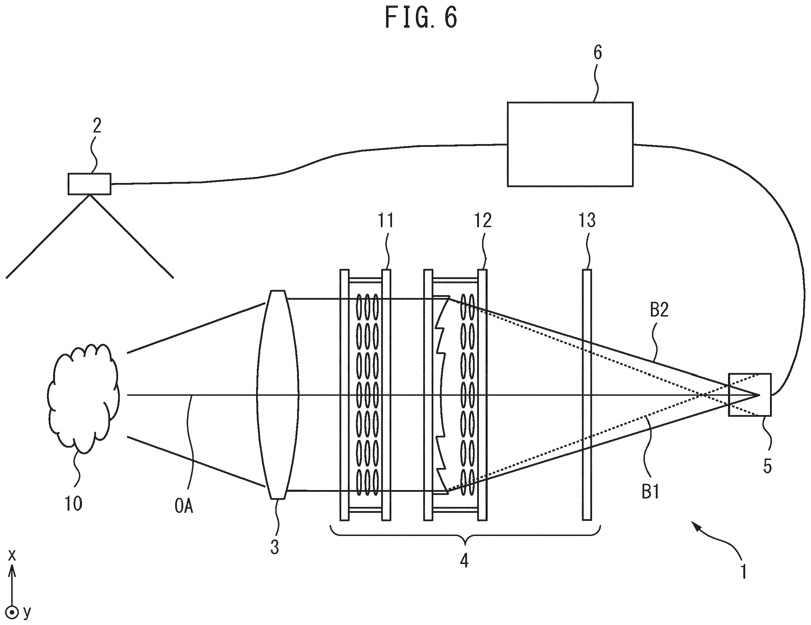

Figure 6 is a diagram schematically illustrating the construction of a hologram generating apparatus incorporating the beam splitting device according to the second embodiment of the present invention. As illustrated in Figure 6, the hologram generating apparatus 1 includes a light source 2, a collimator 3, the beam splitting device 4, a detector 5, and a controller 6. In Figure 6, the component elements of the hologram generating apparatus 1 are identified by the same reference numerals as those used to designate the corresponding component elements in Figure 1. The birefringent lens 12 contained in the beam splitting device 4 may be made identical in structure to the birefringent lens 12-1 contained in the beam splitting device 4 of the first embodiment, except that the relationship between the refractive index of the transparent material layer and the refractive index of the liquid crystal layer is different. Therefore, for the description of the birefringent lens 12, refer to the description previously given with reference to Figure 3.

In the present embodiment, the liquid crystal molecules 35 contained in the liquid crystal layer 34 of the birefringent lens 12 are homogeneously aligned so that the long axes of the liquid crystal molecules 35 are oriented parallel to the x direction or y direction.

Further, in the present embodiment, the material of the transparent material layer 33 and the material of the liquid crystal molecules are chosen so that the refractive index of the transparent material layer 33 become lower than the refractive index of the liquid crystal layer 34 for the polarization component perpendicular to the direction of the long axes of the liquid crystal molecules 35 contained in the liquid crystal layer 34. Since the refractive index of the liquid crystal layer 34 for the polarization component parallel to the direction of the long axes of the liquid crystal molecules 35 is higher than the refractive index of the liquid crystal layer 34 for the polarization component perpendicular to the direction of the long axes, the Fresnel lens surface formed along the boundary between the transparent material layer 33 and the liquid crystal layer 34 so as to be convex toward the transparent material layer 33 has positive power for both the polarization component in the x direction and the polarization component in the y direction. However, since the difference between the refractive index of the transparent material layer 33 and the refractive index of the liquid crystal layer 34 for the polarization component in the x direction is different from the difference between the refractive index of the transparent material layer 33 and the refractive index of the liquid crystal layer 34 for the polarization component in the y direction, the power that the Fresnel lens surface has on the polarization component in the x direction is different from the power that the Fresnel lens surface has on the polarization component in the y direction. Accordingly, as in the first embodiment, the beam passing through the birefringent lens 12 is split into two beams, the convergent beam B1 having the polarization component in the x direction and the convergent beam B2 having the polarization component in the y direction.

The material of the transparent material layer 33 and the material of the liquid crystal molecules may be chosen so that the refractive index of the transparent material layer 33 become higher than the refractive index of the liquid crystal layer 34 for the polarization component parallel to the direction of the long axes of the liquid crystal molecules 35 contained in the liquid crystal layer 34. In this case, the Fresnel lens surface is formed so as to be convex toward the liquid crystal layer 34.

In this embodiment, since the number of birefringent lenses used is reduced to one, the number of devices through which the light from the sample passes is correspondingly smaller, and as a result, the loss of light due to surface reflections is reduced.

Accordingly, the beam splitting device of this embodiment can further improve the efficiency of light utilization.

According to a modified example, the birefringent lens in each of the above embodiments may include two transparent electrodes disposed opposite each other across the liquid crystal layer. For example, as indicated by dashed lines in Figure 3, one transparent electrode 38 is disposed on the surface of the Fresnel lens surface 37 of the transparent material layer 33, and the other transparent electrode 39 is disposed on the surface of the transparent substrate 32 that faces the liquid crystal layer. Then, by controlling the voltage to be applied across the liquid crystal layer of the birefringent lens according to the wavelength of the light emitted from the light source 2, the controller 6 can maintain the difference between the refractive index of the liquid crystal layer and the refractive index of the transparent material layer constant regardless of the wavelength, and as a result, can maintain the power at the Fresnel lens surface at a constant level. Consequently, according to this modified example, each convergent beam can always be converged on the same position, regardless of the wavelength of the light emitted from the light source 2.

The hologram generating apparatus incorporating the beam splitting device according to any one of the above embodiments or their modified examples can also be used as a holographic microscope by generating a hologram of the original sample in enlarged form.

Further, the hologram generating apparatus incorporating the beam splitting device according to any one of the above embodiments or their modified examples may be configured to be switchable between a hologram mode in which a hologram of a sample is generated in the manner described above and a focus mode in which an image of the sample is generated by focusing the image on the detector.

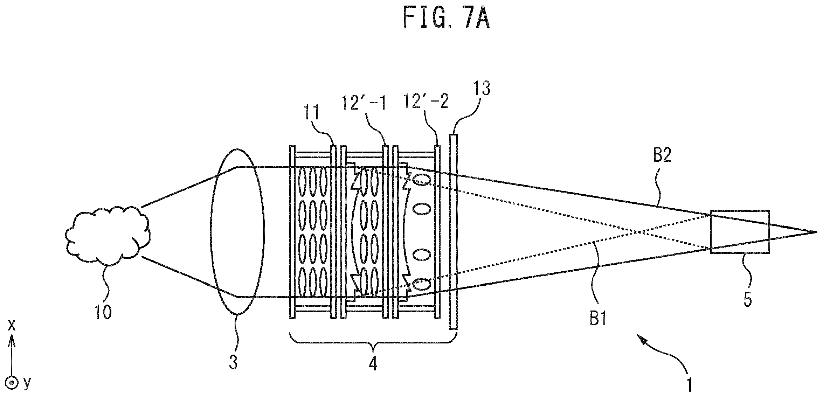

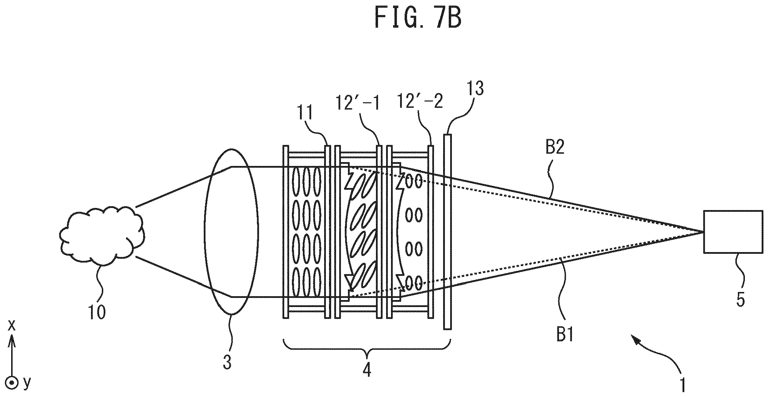

Figure 7A is a diagram illustrating the case in which the hologram generating apparatus incorporating the beam splitting device according to any one of the embodiments of the present invention or their modified examples is used in the hologram mode. On the other hand, Figure 7B is a diagram illustrating the case in which the hologram generating apparatus incorporating the beam splitting device according to any one of the embodiments of the present invention or their modified examples is used in the focus mode. In Figures 7A and 7B, the component elements of the hologram generating apparatus are identified by the same reference numerals as those used to designate the corresponding component elements of the hologram generating apparatus in Figure 1. Further, in Figures 7A and 7B, the controller and the light source are omitted from illustration for simplicity.

However, in the hologram generating apparatus 1 illustrated in Figures 7A and 7B, the birefringent lenses 12'-1 and 12'-2 contained in the beam splitting device 4 differ from the birefringent lenses 12-1 and 12-2 illustrated in Figure 1 in that two transparent electrodes opposite each other across the liquid crystal layer, as indicated by dashed lines in Figure 3, are added so that the lens power can be adjusted. Instead of the birefringent lenses 12'-1 and 12'-2, use may be made of the liquid crystal birefringent lenses 41 and 42 depicted in Figures 4A, 4B, and 5.

As in the case of Figure 1, when the light enters the beam splitting device 4, the polarization component parallel to the x direction is converted into the convergent beam B1 by the birefringent lens 12'-1.
On the other hand, the polarization component parallel to the y direction perpendicular to the x direction is converted into the convergent beam B2 by the birefringent lens 12'-2. In each of the birefringent lenses 12'-1 and 12'-2, the refractive index of the liquid crystal layer varies according to the voltage applied between the two transparent electrodes sandwiching the liquid crystal layer; in view of this, the power of each of the birefringent lenses 12'-1 and 12'-2 is varied by adjusting the corresponding voltage.

As illustrated in Figure 7A, when using the hologram generating apparatus 1 in the hologram mode, the voltage to be applied between the two transparent electrodes sandwiching the liquid crystal layer in the birefringent lens 12'-1 and the voltage to be applied between the two transparent electrodes sandwiching the liquid crystal layer in the birefringent lens 12'-2 are adjusted so that the spot size of the convergent beam B1 and the spot size of the convergent beam B2 become substantially equal to each other on the detection surface of the detector 5.

On the other hand, as illustrated in Figure 7B, when using the hologram generating apparatus 1 in the focus mode, the voltage to be applied between the two transparent electrodes sandwiching the liquid crystal layer in the birefringent lens 12'-1 is adjusted so that the convergent beam B1 is focused on the detection surface of the detector 5, i.e., the spot size of the convergent beam B1 becomes the smallest on the detection surface of the detector 5. Similarly, the voltage to be applied between the two transparent electrodes sandwiching the liquid crystal layer in the birefringent lens 12'-2 is adjusted so that the convergent beam B2 is focused on the detection surface of the detector 5, i.e., the spot size of the convergent beam B2 becomes the smallest on the detection surface of the detector 5.

In this way, the hologram generating apparatus incorporating the beam splitting device according to any one of the above embodiments or their modified examples can be switched between the hologram mode and the focus mode by just adjusting the voltage to be applied to the liquid crystal layer in each birefringent lens of the beam splitting device. There is therefore no need to mechanically move each corresponding component element of the hologram generating apparatus in order to switch it between the hologram mode and the focus mode. This not only serves to simplify the construction of the hologram generating apparatus, but also serves to prevent any component element from moving out of alignment when switching is made between the hologram mode and the focus mode.

According to another modified example, the beam splitting device may include a bulk lens in addition to the birefringent lenses.

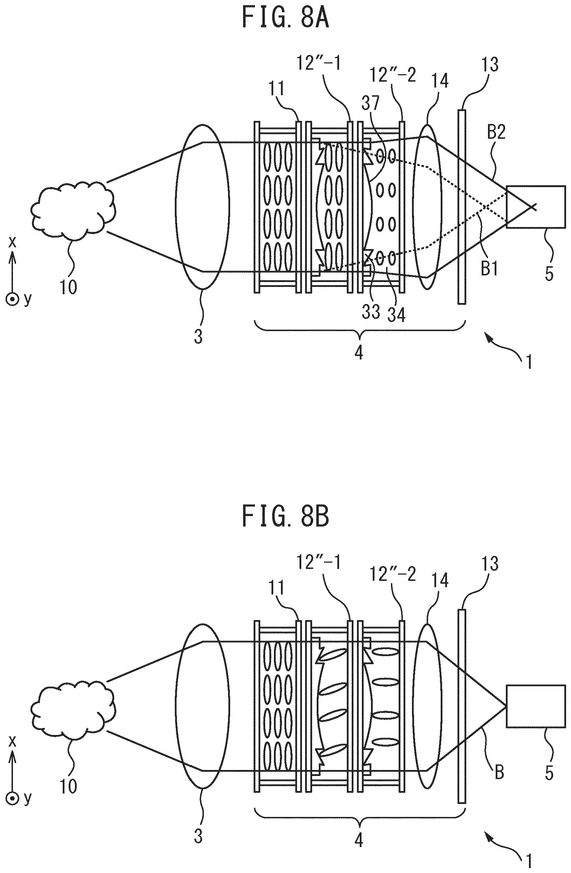

Figure 8A is a diagram illustrating the case in which the hologram generating apparatus incorporating the beam splitting device having a bulk lens is used in the hologram mode. On the other hand, Figure 8B is a diagram illustrating the case in which the hologram generating apparatus incorporating the beam splitting device having a bulk lens is used in the focus mode. In Figures 8A and 8B, the component elements of the hologram generating apparatus are identified by the same reference numerals as those used to designate the corresponding component elements of the hologram generating apparatus in Figure 1. Further, in Figures 8A and 8B, the controller and the light source are omitted from illustration for simplicity.

In this modified example, a bulk lens 14 having positive power is interposed between the birefringent lens 12"-2 and the polarizing plate 13. Alternatively, the bulk lens 14 may be interposed between the polarizing plate 13 and the detector 5.

In the hologram generating apparatus 1 illustrated in Figures 8A and 8B, the birefringent lenses 12"-1 and 12"-2 contained in the beam splitting device 4 differ from the birefringent lenses 12-1 and 12-2 illustrated in Figure 1 in that two transparent electrodes opposite each other across the liquid crystal layer, as indicated by dashed lines in Figure 3, are added so that the lens power can be adjusted.

Further, in this modified example, when no voltage is applied between the two transparent electrodes sandwiching the liquid crystal layer, the birefringent lens 12"-1, 12"-2 does not have any power, and when voltage is applied, the liquid crystal molecules in the liquid crystal layer are aligned vertically in a direction substantially parallel to the optical axis so that the birefringent lens 12"-1, 12"-2 has power for the polarization component parallel to the direction of the long axes of the liquid crystal molecules. Then, when voltage is applied between the two transparent electrodes sandwiching the liquid crystal layer, the direction of the long axes of the liquid crystal molecules is brought closer to the direction parallel to a plane perpendicular to the optical axis, as a result of which the refractive index of the liquid crystal layer for the polarization component parallel to the direction of the long axes of the liquid crystal molecules increases, and thus the birefringent lens 12"-1, 12"-2 has power.

In the birefringent lens 12"-1, the material of the transparent material layer and the material of the liquid crystal molecules contained in the liquid crystal layer are chosen so that, when no voltage is applied between the two transparent electrodes sandwiching the liquid crystal layer, the birefringent lens 12"-1 does not have any power not only for the polarization component parallel to the x direction but also for the polarization component parallel to the y direction. Similarly, in the birefringent lens 12"-2, the material of the transparent material layer 33 and the material of the liquid crystal molecules contained in the liquid crystal layer 34 are chosen so that, when no voltage is applied between the two transparent electrodes sandwiching the liquid crystal layer 34, the birefringent lens 12"-2 does not have any power not only for the polarization component parallel to the x direction but also for the polarization component parallel to the y direction. Accordingly, in each of the birefringent lenses 12"-1 and 12"-2, when no voltage is applied between the two transparent electrodes sandwiching the liquid crystal layer, the beam passing through the beam splitting device 4 is not split.

As illustrated in Figure 8B, the power of the bulk lens 14 is set so that, when no voltage is applied between the two transparent electrodes sandwiching the liquid crystal layer in each of the birefringent lenses 12"-1 and 12"-2, the beam B passed through the beam splitting device 4 is focused on the detection surface of the detector 5.

Accordingly, when using the hologram generating apparatus 1 in the focus mode, voltage does not need to be applied between the two transparent electrodes sandwiching the liquid crystal layer in each of the birefringent lenses 12"-1 and 12"-2.

Further, in this modified example, the Fresnel lens surface 37 formed along the boundary between the transparent material layer 33 and the liquid crystal layer 34 is set so that the birefringent lens 12"-2 will have negative power by adjusting the voltage to be applied between the two transparent electrodes sandwiching the liquid crystal layer 34. For example, as in the earlier described embodiment, when the material of the transparent material layer 33 and the material of the liquid crystal molecules contained in the liquid crystal layer 34 are chosen so that the refractive index of the liquid crystal layer 34 for the polarization component parallel to the y direction becomes higher than the refractive index of the transparent material layer 33 by adjusting the voltage to be applied between the two transparent electrodes sandwiching the liquid crystal layer 34, the Fresnel lens surface 37 is formed so as to be convex toward the liquid crystal layer 34.

Accordingly, when using the hologram generating apparatus 1 in the hologram mode, as illustrated in Figure 8A, the birefringent lens 12"-1 has positive power for the polarization component parallel to the x direction when voltage is applied between the two transparent electrodes sandwiching the liquid crystal layer in the birefringent lens 12"-1. As a result, the beam B1 whose plane of polarization is parallel to the x direction is focused forwardly of the detection surface of the detector 5 (i.e., at a position nearer to the beam splitting device 4). Conversely, when voltage is applied between the two transparent electrodes sandwiching the liquid crystal layer in the birefringent lens 12"-2, the birefringent lens 12"-2 has negative power for the polarization component parallel to the y direction. As a result, the beam B2 whose plane of polarization is parallel to the y direction is focused rearwardly of the detection surface of the detector 5. Accordingly, the voltage to be applied between the two transparent electrodes sandwiching the liquid crystal layer in the birefringent lens 12"-1 and the voltage to be applied between the two transparent electrodes sandwiching the liquid crystal layer in the birefringent lens 12"-2 need only be adjusted so that the spot size of the beam B1 and the spot size of the beam B2 become substantially equal to each other on the detection surface of the detector 5.

According to this modified example, since the bulk lens can be designed to provide part of the power needed to converge the light passing through the beam splitting device, the power of each birefringent lens can be reduced correspondingly. Furthermore, in this modified example, when using the hologram generating apparatus in the focus mode, since there is no need to apply voltage to the liquid crystal layer in each birefringent lens the power consumption of the hologram generating apparatus can be reduced.

The liquid crystal molecules contained in the liquid crystal layer in each of the birefringent lenses 12"-1 and 12"-2 may be aligned so that the long axes of the liquid crystal molecules are oriented substantially parallel to the plane perpendicular to the optical axis. In this case, if no voltage is applied between the two transparent electrodes sandwiching the liquid crystal layer, each of the birefringent lenses 12"-1 and 12"-2 has power. Accordingly, when using the hologram generating apparatus in the hologram mode, the controller need not apply any voltage between the two transparent electrodes sandwiching the liquid crystal layer in each of the birefringent lenses 12"-1 and 12"-2.

On the other hand, when voltage is applied between the two transparent electrodes sandwiching the liquid crystal layer, the long axes of the liquid crystal molecules are tilted toward the direction parallel to the optical axis; as a result, the refractive index of the liquid crystal layer for the polarization component parallel to the direction of the long axes of the liquid crystal molecules decreases as the applied voltage increases. Accordingly, when using the hologram generating apparatus in the focus mode, the controller only needs to apply voltage between the two transparent electrodes sandwiching the liquid crystal layer in each of the birefringent lenses 12"-1 and 12"-2 until the birefringent lenses 12"-1 and 12"-2 no longer have power.

The Fresnel lens surface of each birefringent lens may be formed so that, when using the hologram generating apparatus in the hologram mode, the birefringent lens 12"-1 has negative power and the birefringent lens 12"-2 has positive power. Further, in this modified example also, the liquid crystal birefringent lenses 41 and 42 depicted in Figures 4A, 4B, and 5 may be used instead of the birefringent lenses 12"-1 and 12"-2.

The refractive index of the liquid crystal layer also varies with the wavelength of the light passing through it. Accordingly, the power of each of the birefringent lenses 12"-1 and 12"-2 also varies with the wavelength of the light incident on the lens. For example, the shorter the wavelength of the incident light, the larger the refractive index of the liquid crystal layer, and thus the larger is the power of each of the birefringent lenses 12"-1 and 12"-2. As a result, the focusing position of the beam B1 having the polarization component parallel to the x direction and the focusing position of the beam B2 having the polarization component parallel to the y direction each vary depending on the wavelength of the light incident on the corresponding lens. However, in this modified example, the birefringent lens 12"-1 has positive power for the polarization component parallel to the x direction, on the other hand, the birefringent lens 12"-2 has negative power for the polarization component parallel to the y direction. As a result, as the wavelength of the light entering the beam splitting device 4 becomes shorter, the focusing position of the beam B1 moves forward, while the focusing position of the beam B2 moves rearward. Accordingly, the position at which the spot size of the beam B1 and the spot size of the beam B2 become substantially equal remains virtually unchanged, regardless of the wavelength.

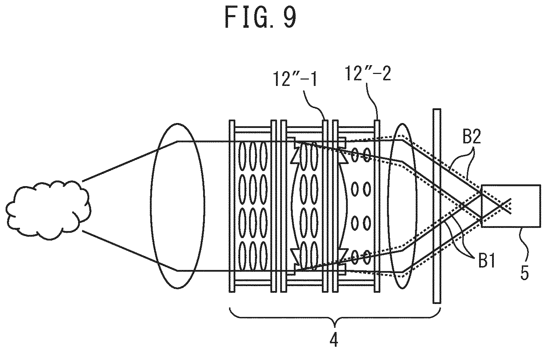

For example, in Figure 9, suppose that when the wavelength of the light entering the beam splitting device 4 is λ1, the beams B1 and B2 are beams respectively represented by solid lines. In this case, if the wavelength of the light entering the beam splitting device 4 is λ2 which is shorter than λ1, then the beams B1 and B2 are shifted as indicated by dashed lines.

In this way, the detector 5 need only be arranged so that the detection surface of the detector 5 is located at the position at which the spot size of the beam B1 and the spot size of the beam B2 become substantially equal to each other regardless of the wavelength; then, the spot sizes of the beams B1 and B2 always become substantially equal to each other on the detection surface of the detector 5, regardless of the wavelength, though the spot sizes of the beams B1 and B2 both become larger or smaller depending on the wavelength. Accordingly, regardless of the wavelength of the light that the light source emits, the hologram generating apparatus can generate an appropriate hologram without having to adjust the voltage to be applied to the liquid crystal layer in each birefringent lens according to the wavelength.

Similarly, when the refractive index of the liquid crystal layer varies with the ambient temperature of the birefringent lenses, the spot sizes of the beams B1 and B2 always become substantially equal to each other on the detection surface of the detector 5, though the focusing positions of the beams B1 and B2 respectively change. Accordingly, in this case also, the hologram generating apparatus can generate an appropriate hologram without having to adjust the voltage to be applied to the liquid crystal layer in each birefringent lens.

Since the above effect can be obtained without adjusting the voltage to be applied to the liquid crystal layer in each birefringent lens, the transparent electrodes sandwiching the liquid crystal layer may be omitted from each of the birefringent lenses 12"-1 and 12"-2, if the hologram generating apparatus is not used in the focus mode. However, in this case, the material of the liquid crystal molecules and the material forming the transparent material layer in each birefringent lens are chosen so that when no voltage is applied to the liquid crystal layer, the birefringent lenses 12"-1 and 12"-2 have positive power and negative power, respectively.

The Fresnel lens surface of each birefringent lens could be formed in the shape of a kinoform so that the Fresnel lens surface could be made to function as a diffractive lens. In this case, if each birefringent lens were provided with two transparent electrodes on both sides of the liquid crystal layer in order to switch the hologram generating apparatus between the focus mode and the hologram mode, it would be difficult to keep the focusing positions of the beams B1 and B2 unchanged regardless of the wavelength of the incident light by adjusting the voltage to be applied to the liquid crystal layer according to the wavelength of the incident light. By contrast, according to the hologram generating apparatus illustrated in Figures 8A and 8B, even if the wavelength of the incident light changes, the spot size of the beam B1 and the spot size of the beam B2 can be made substantially equal to each other on the detection surface of the detector 5 without having to adjust the voltage to be applied to the liquid crystal layer in each birefringent lens. Accordingly, the hologram generating apparatus illustrated in Figures 8A and 8B is also advantageous when the Fresnel lens surface of each birefringent lens is made to function as a diffractive lens.

As described above, a person skilled in the art can make various changes to match any mode of implementation without departing from the scope of the invention as defined in the appended claims.

### [DESCRIPTION OF THE REFERENCE NUMERALS]

- 1: HOLOGRAM GENERATING APPARATUS
- 2: LIGHT SOURCE
- 3: COLLIMATOR
- 4: BEAM SPLITTING DEVICE
- 5: DETECTOR
- 6: CONTROLLER
- 11: PHASE MODULATING DEVICE
- 12, 12-1, 12-2: BIREFRINGENT LENS
- 12'-1, 12'-2: BIREFRINGENT LENS
- 12"-1, 12"-2: BIREFRINGENT LENS
- 13: POLARIZING PLATE
- 41, 42: LIQUID CRYSTAL BIREFRINGENT LENS

## Claims

1. A beam splitting device for recording in-line holograms comprising:
a phase modulating device (11) which provides a phase difference between a first polarization component contained in incident light and having a plane of polarization parallel to a first direction and a second polarization component contained in the incident light and having a plane of polarization parallel to a second direction perpendicular to the first direction;
at least one birefringent lens (12, 12-1, 12-2, 41, 42) which splits the incident light into a first beam having the first polarization component and a second beam having the second polarization component, and which causes both the first beam and the second beam to emerge along a common optical axis, and converting at least one of the first and second beams into a convergent light, and
a polarizing plate (13) which is disposed downstream the at least one birefringent lens, and which is arranged in the common path of each of the first and second beams, to allow a polarization component parallel in a direction that bisects an angle that the first direction makes with the second direction to pass through,
wherein the phase modulating device (11) includes a liquid crystal layer (20) which contains liquid crystal molecules (25) and which is aligned so that long axes of the liquid crystal molecules are oriented in the first direction, and two transparent electrodes (23, 24) which are disposed opposite each other by sandwiching the liquid crystal layer (20) therebetween, and
wherein the phase modulating device (11) shifts a phase of the first polarization component according to a voltage applied between the two transparent electrodes (23, 24) to cause a phase difference to occur between the first polarization component and the second polarization component.

2. The beam splitting device according to claim 1, wherein the at least one birefringent lens includes a first birefringent (12-1) lens and a second birefringent lens (12-2) arranged along the optical axis, and wherein:
the first birefringent lens (12-1) includes a birefringent layer (34) which has a first refractive index for the first polarization component and a second refractive index for the second polarization component, and a transparent material layer (33) which has the second refractive index, wherein the birefringent layer and the transparent material layer are arranged along the optical axis so as to form therebetween a lens surface that has power for the first polarization component; and
the second birefringent lens (12-2) includes a birefringent layer which has a third refractive index for the first polarization component and a fourth refractive index for the second polarization component, and a transparent material layer which has the third refractive index, wherein the birefringent layer and the transparent material layer are arranged along the optical axis so as to form therebetween a lens surface that has power for the second polarization component.

3. The beam splitting device according to claim 2, wherein the first birefringent lens (12'-1, 12"-1) further includes two transparent electrodes (38, 39) disposed opposite each other by sandwiching the birefringent layer (34) therebetween, and wherein
the birefringent layer (34) of said first birefringent lens is a liquid crystal layer which contains liquid crystal molecules and which is aligned so that long axes of the liquid crystal molecules are oriented in a direction parallel to the first polarization component, and
the first birefringent lens (12'-1, 12"-1) varies its power for the first polarization component by varying the first refractive index according to a voltage applied between the two transparent electrodes (38, 39).

4. The beam splitting device according to claim 1, wherein the at least one birefringent lens (12) consists in a single birefringent lens and includes a birefringent layer (34) which has a first refractive index for the first polarization component and a second refractive index for the second polarization component, and a transparent material layer (33) which has a third refractive index, wherein the birefringent layer (34) and the transparent material layer (33) are arranged along the optical axis so as to form therebetween a lens surface that has first power for the first polarization component and second power for the second polarization component.

## Patentansprüche

1. Strahlteilungseinrichtung zum Aufzeichnen von In-Line-Hologrammen, umfassend:
eine Phasenmodulationseinrichtung (11), die eine Phasendifferenz bereitstellt zwischen einer ersten Polarisationskomponente, die in Einfallslicht enthalten ist und eine Polarisationsebene parallel zu einer ersten Richtung aufweist, und einer zweiten Polarisationskomponente, die im Einfallslicht enthalten ist und eine Polarisationsebene parallel zu einer zweiten Richtung, die senkrecht zur ersten Richtung liegt, aufweist;
mindestens eine Doppelbrechungslinse (12, 12-1, 12-2, 41, 42), die das Einfallslicht in einen ersten Strahl mit der ersten Polarisationskomponente und einen zweiten Strahl mit der zweiten Polarisationskomponente aufspaltet und die bewirkt, dass sowohl der erste Strahl wie der zweite Strahl entlang einer gemeinsamen optischen Achse austreten, und den ersten und/oder den zweiten Strahl in konvergentes Licht umwandelt, und
eine Polarisatorplatte (13), die hinter der mindestens einen Doppelbrechungslinse gelegen ist und die im gemeinsamen Strahlengang des ersten und des zweiten Strahls angeordnet ist, so dass ein Durchtritt einer Polarisationskomponente parallel in einer Richtung, die einen Winkel halbiert, den die erste Richtung mit der zweiten Richtung einschließt, ermöglicht ist,
wobei die Phasenmodulationseinrichtung (11) eine Flüssigkristallschicht (20), die Flüssigkristallmoleküle (25) enthält und die so ausgerichtet ist, dass lange Achsen der Flüssigkristallmoleküle in die erste Richtung orientiert sind, und zwei transparente Elektroden (23, 24) aufweist, die durch sandwichartiges Anordnen der Flüssigkristallschicht (20) dazwischen einander gegenüberliegend angeordnet sind, und
wobei die Phasenmodulationseinrichtung (11) eine Phase der ersten Polarisationskomponente gemäß einer zwischen den beiden transparenten Elektroden (23, 24) angelegten Spannung verschiebt, so dass eine Phasendifferenz zwischen der ersten Polarisationskomponente und der zweiten Polarisationskomponente auftritt.

2. Strahlteilungseinrichtung nach Anspruch 1, wobei die mindestens eine Doppelbrechungslinse eine erste Doppelbrechungslinse (12-1) und eine zweite Doppelbrechungslinse (12-2) aufweist, die entlang der optischen Achse angeordnet sind, und wobei:
die erste Doppelbrechungslinse (12-1) eine doppelbrechende Schicht (34), die einen ersten Brechungsindex für die erste Polarisationskomponente und einen zweiten Brechungsindex für die zweite Polarisationskomponente aufweist, und eine transparente Materialschicht (33) enthält, die den zweiten Brechungsindex aufweist, wobei die doppelbrechende Schicht und die transparente Materialschicht entlang der optischen Achse so angeordnet sind, dass dazwischen eine Linsenfläche ausgebildet ist, die eine Linsenstärke für die erste Polarisationskomponente aufweist; und
die zweite Doppelbrechungslinse (12-2) eine doppelbrechende Schicht, die einen dritten Brechungsindex für die erste Polarisationskomponente und einen vierten Brechungsindex für die zweite Polarisationskomponente aufweist, und eine transparente Materialschicht enthält, die den dritten Brechungsindex aufweist, wobei die doppelbrechende Schicht und die transparente Materialschicht entlang der optischen Achse so angeordnet sind, dass dazwischen eine Linsenfläche ausgebildet ist, die eine Linsenstärke für die zweite Polarisationskomponente aufweist.

3. Strahlteilungseinrichtung nach Anspruch 2, wobei die erste Doppelbrechungslinse (12'-1, 12"-1) weiter zwei transparente Elektroden (38, 39) aufweist, die durch sandwichartiges Anordnen der doppelbrechenden Schicht (34) dazwischen einander gegenüberliegend angeordnet sind, und wobei die doppelbrechende Schicht (34) der ersten Doppelbrechungslinse als Flüssigkristallschicht ausgebildet ist, die Flüssigkristallmoleküle enthält und die so ausgerichtet ist, dass lange Achsen der Flüssigkristallmoleküle in eine Richtung parallel zur ersten Polarisationskomponente orientiert sind, und
die erste Doppelbrechungslinse (12'-1, 12"-1) ihre Linsenstärke für die erste Polarisationskomponente durch Verändern des ersten Brechungsindex gemäß einer zwischen den beiden transparenten Elektroden (38, 39) angelegten Spannung verändert.

4. Strahlteilungseinrichtung nach Anspruch 1, wobei die mindestens eine Doppelbrechungslinse (12) aus einer einzigen Doppelbrechungslinse besteht und eine doppelbrechende Schicht (34), die eine ersten Brechungsindex für die erste Polarisationskomponente und einen zweiten Brechungsindex für die zweite Polarisationskomponente aufweist, und eine transparente Materialschicht (33) enthält, die einen dritten Brechungsindex aufweist, wobei die doppelbrechende Schicht (34) und die transparente Materialschicht (33) entlang der optischen Achse so angeordnet sind, dass dazwischen eine Linsenfläche ausgebildet ist, die eine erste Linsenstärke für die erste Polarisationskomponente und eine zweite Linsenstärke für die zweite Polarisationskomponente aufweist.

## Revendications

1. Dispositif de division de faisceau pour enregistrer des hologrammes en ligne comprenant :
un dispositif de modulation de phase (11) qui fournit une différence de phase entre une première composante de polarisation contenue dans une lumière incidente et ayant un plan de polarisation parallèle à une première direction et une deuxième composante de polarisation contenue dans la lumière incidente et ayant un plan de polarisation parallèle à une deuxième direction perpendiculaire à la première direction ;
au moins une lentille biréfringente (12, 12-1, 12-2, 41, 42) qui divise la lumière incidente en un premier faisceau ayant la première composante de polarisation et un deuxième faisceau ayant la deuxième composante de polarisation, et qui amène à la fois le premier faisceau et le deuxième faisceau à émerger le long d'un axe optique commun, et convertissant au moins l'un des premier et deuxième faisceaux en une lumière convergente, et
une plaque de polarisation (13) qui est disposée en aval de ladite au moins une lentille biréfringente, et qui est agencée dans le trajet commun de chacun des premier et deuxième faisceaux, pour permettre à une composante de polarisation parallèle dans une direction qui divise en deux un angle que la première direction fait avec la deuxième direction de passer à travers,
dans lequel le dispositif de modulation de phase (11) comprend une couche de cristal liquide (20) qui contient des molécules de cristal liquide (25) et qui est alignée de sorte que les axes longs des molécules de cristal liquide soient orientés dans la première direction, et deux électrodes transparentes (23, 24) qui sont disposées l'une en face de l'autre en prenant en sandwich la couche de cristal liquide (20) entre elles, et
dans lequel le dispositif de modulation de phase (11) décale une phase de la première composante de polarisation conformément à une tension appliquée entre les deux électrodes transparentes (23, 24) pour provoquer l'apparition d'une différence de phase entre la première composante de polarisation et la deuxième composante de polarisation.

2. Dispositif de division de faisceau selon la revendication 1, dans lequel ladite au moins une lentille biréfringente comprend une première lentille biréfringente (12-1) et une deuxième lentille biréfringente (12-2) agencées le long de l'axe optique, et dans lequel :
la première lentille biréfringente (12-1) comprend une couche biréfringente (34) qui a un premier indice de réfraction pour la première composante de polarisation et un deuxième indice de réfraction pour la deuxième composante de polarisation, et une couche de matériau transparent (33) qui a le deuxième indice de réfraction, dans lequel la couche biréfringente et la couche de matériau transparent sont agencées le long de l'axe optique de manière à former entre elles une surface de lentille qui a une puissance pour la première composante de polarisation ; et
la deuxième lentille biréfringente (12-2) comprend une couche biréfringente qui a un troisième indice de réfraction pour la première composante de polarisation et un quatrième indice de réfraction pour la deuxième composante de polarisation, et une couche de matériau transparent qui a le troisième indice de réfraction, dans lequel la couche biréfringente et la couche de matériau transparent sont agencées le long de l'axe optique de manière à former entre elles une surface de lentille qui a une puissance pour la deuxième composante de polarisation.

3. Dispositif de division de faisceau selon la revendication 2, dans lequel la première lentille biréfringente (12'-1, 12"-1) comprend en outre deux électrodes transparentes (38, 39) disposées l'une en face de l'autre en prenant en sandwich la couche biréfringente (34) entre elles, et dans lequel
la couche biréfringente (34) de ladite première lentille biréfringente est une couche de cristal liquide qui contient des molécules de cristal liquide et qui est alignée de sorte que les axes longs des molécules de cristal liquide soient orientés dans une direction parallèle à la première composante de polarisation, et
la première lentille biréfringente (12'-1, 12"-1) varie sa puissance pour la première composante de polarisation en faisant varier le premier indice de réfraction conformément à une tension appliquée entre les deux électrodes transparentes (38, 39).

4. Dispositif de division de faisceau selon la revendication 1, dans lequel ladite au moins une lentille biréfringente (12) consiste en une lentille biréfringente unique et comprend une couche biréfringente (34) qui a un premier indice de réfraction pour la première composante de polarisation et un deuxième indice de réfraction pour la deuxième composante de polarisation, et une couche de matériau transparent (33) qui a un troisième indice de réfraction, dans lequel la couche biréfringente (34) et la couche de matériau transparent (33) sont agencées le long de l'axe optique de manière à former entre elles une surface de lentille qui a une première puissance pour la première composante de polarisation et une deuxième puissance pour la deuxième composante de polarisation.
